# EUROPEAN PATENT SPECIFICATION

(11) **EP 2 376 272 B1**
(45) Date of publication and mention of the grant of the patent: **23.07.2014**
(21) Application number: 09801526.6
(22) Date of filing: 17.12.2009
(51) Int. Cl.: B29C 53/58, B29C 53/84, B29D 23/00

(54) **METHOD OF MOULDING FIBRE REINFORCED THEROMPLASTIC COMPOSITE TUBES**
VERFAHREN ZUM FORMEN VON FASERVERSTÄRKTEN THERMOPLASTISCHEN VERBUNDROHREN
PROCÉDÉ DE MOULAGE DE TUBES COMPOSITES THERMOPLASTIQUES RENFORCÉS PAR DES FIBRES

(30) Priority: 18.12.2008 GB 0822996
(43) Date of publication of application: 19.10.2011
(73) Proprietor: Crompton Technology Group Ltd., Banbury, Oxfordshire OX16 4SU (GB)
(72) Inventor: DEWHIRST, Michael, James, Warwickshire CV37 7HN (GB)
(74) Representative: Leckey, David Herbert
(86) International application number: PCT/GB2009/002900
(87) International publication number: WO 2010/070286

(56) References cited:
- EP-A2- 0 449 779
- WO-A1-98/38030
- DE-U- 1 880 176
- JP-A- 2003 207 077
- US-A- 4 772 438
- US-A- 5 198 058
- US-A- 5 221 391
- US-A- 5 468 327
- US-A- 5 638 870

## Description

### Field

This invention relates to a method of forming fibre reinforced thermoplastic composite tubes by placement of fibres and resin matrix onto a mandrel and further processing the composite materials insitu

### Background of the Invention

It is well known to manufacture reinforced composite shafts or tubes by winding resin fibres impregnated with a thermosetting resin such as an epoxy resin, sometimes in the form of a tape, around a mandrel and then curing the fibre/resin composite on the mandrel. It is also known from WO-A-9218559 to impregnate glass fibres with a thermoplastic material and then wind the impregnated glass fibres around a mandrel and heat the windings to fuse the thermoplastic polymer resin.

Elongated fibre and thermosatting resin composites are also formed by a pultrusion process as is illustrated in US-A-4943338, and US 4673,541 in which impregnated fibres are drawn through an elongated die and the resin is substantially set within the die. A similar process is described in GB-A-1275379 which describes reinforcing a thermoplastic pipe by applying a layer of fibrous material to the cold pipe and then pulling the pipe through a tapered sleeve cold forming the pipe and layer to a smaller diameter. The pipe is then heated to soften the thermoplastic material so that the softened plastic is forced between the fibres as the pipe is pulled through a heated former.

EPO449779 and US5468327 describe methods for forming a tube using a braid of reinforcing fibres. US5638870 describes a method in which a woven reinforcing material is wrapped around a former.

The present invention provides a method of forming a fibre reinforced resin composite which is particularly useful for forming thermoplastic composite components.

### Statements of invention

According to a first aspect of the invention there is provided a method of forming a fibre reinforced composite tube or pipe as defined in claim 1, the method comprising the steps of forming reinforcing fibres and polymeric resin matrix material around a mandrel to provide a composite tubular pre-form on the mandrel, passing the mandrel with the pre-form thereon through a heated die to compact and reduce the diameter of the pre-form and change the state of the matrix material, the mandrel with the formed tube thereon exiting the die and the formed tube being removed from the mandrel, the method including the steps of helically winding the reinforcing fibres and thermoplastic fibres around the mandrel, the thermoplastic fibres being caused to flow and solidify on cooling to form the matrix material.

Preferred embodiments of the invention are defined in the dependent claims.

The mandrel may be pushed or pulled through the die as is desired.

Fibre reinforced thermoplastic tube may be formed by mixing the reinforcment fibres with thermoplastic fibres and then winding the mixed fibrous material onto the mandrel using a conventional filament winding machine but with no wet-out system, the thermoplastic fibres being softened in the heated die and caused to flow and form the resin matrix during compaction.

The ratio of reinforcment fibre and thermoplastic filaments co-wound is approximately 40%-60% (by volume). The pre-form is compacted in the die such that the finished composite tube preferably has a Fibre Volume Fraction of 60-70%, and preferably about between 55%-65%.

The mandrel may be passed through a heated die having a plurality of heat zones of increasing temperature including a zone having temperature higher than the melting point of the thermoplastic fibres. The formed tube then exits the die via a cooling zone.

The reinforcement fibre may be supplied as a roving on a spool with either no sizing or a thermoplastic specific sizing. The thermoplastic fibres matrix may be supplied in a multifilament form on a spool.

Typical reinforcement fibres comprise at least one of E-glass, S-glass, Aramid, Quartz, Ceramic, polymer fibre, a liquid crystal polymer fibre , any one of a range of carbon fibres, or a mixture thereof.

The matrix could be any thermoplastic, preferably one of PEI (polyetherimide), PPS ( Polyphenylenesulpone), PAI (Polyamide-imide), PES (polyethersulphone) and more preferably PEEK (Polyetheretherketone). Other additives may be supplied separately or as part of the reinforcing fibre and/or matrix rovings. These additives may be used to impart specific mechanical or physical properties to the composite, for example increased resistance to impact or electrical conductivity.

### Description of the Drawings

The Invention will be described by way of Example and with reference to the accompanying drawings in which:
- Fig. 1: is a schematic view of the forming of the wound composite pre-form onto the mandrel, in accordance with the invention,
- Fig. 2: shows a fisrt stage in heating and compaction of the pre-form on the mandrel and
- Fig. 3: shows a second stage in the heating and compaction process, and
- Fig 4: shows a section of a composite tube formed in accordance with the present invention.

### Detailed Description of the invention

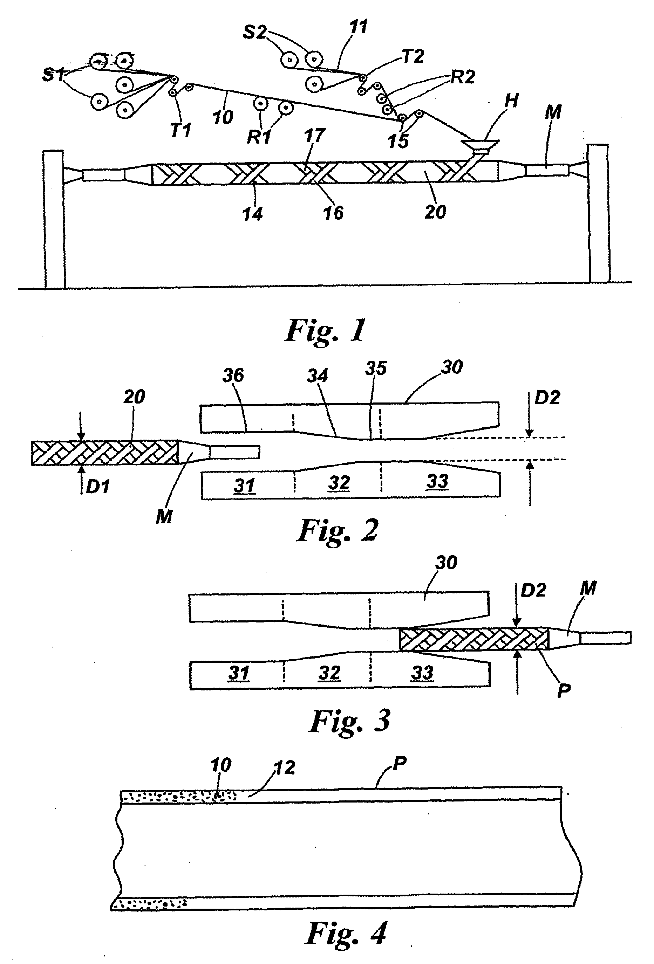

With reference to Fig. 1 of the drawings, there is illustrated a winding process for manufacturing a composite tube or pipe P having a thermoplastic matrix (Fig.4). Continuous reinforcing fibres 10 in this example S glass or Carbon fibre and continuous length thermoplastic fibres or filaments 11, in this example PEEK , which form the resin matrix 12 of the pipe body, are provided on spools S1 and S2 respectively which are typically housed in a creel. During the winding process the reinforcement fibre 10 and the matrix filaments 11 will be mounted on tensioners T1 and T2 respectively at the rear of a winding machine W. The two fibrous materials 10 & 11 will pass over a series of pins and rollers, schematically shown as rollers R 1 and R2 to allow the tows or bundles of fibres 10 and filaments 11 to be spread. The reinforcement fibres 10 and matrix filaments 11 will be kept separate over their own sets of rollers and pins R during the spreading process.

The PEEK filaments are typically < 0.7µ in diameter and the reinforcement carbon fibres may be 5-7 µ in diameter and the Glass fibre about 12 µ in diameter.

The spread fibres 10 and filaments 11 will be laid on joint pulleys and pins, shown schematically as rollers 15 , with the reinforcement fibre 10 spread on top of the spread matrix filaments 11 : This is to promote substantially total co-mingling of the fibres and filaments to ensure that the matrix filaments are evenly distributed amongst the reinforcement fibres so during the next stage of the process the matrix resin has a minimal distance to flow so as to promote maximum "wet-out' of the reinforcement fibres, as the materials are consolidated and heated to form a composite tube P. The ratio of reinforcment fibre 10 and thermoplastic filaments 11 co-wound will be approximately 50% each (by volume) and preferably 40% - 60% respectively. The mingled fibres and filaments are then passed through a placement head H for placement onto a rotatable mandrel M in order to helically wind the fibres and filaments onto the mandrel and form a perform 20 comprising oppositely biased layers 16 & 17.

Upon completion of the winding process represented in Figure 1, the co-wound semi-finished fibre/thermoplastic pre-form 20 in situ on the madrel M and has a predetermined external diameter of D1. The pre-form and mandrel are presented to a heated die 30 as shown in Fig. 2 and then pushed through the die 30 as shown in Figs. 3. The die 30 has plurality of temperature zones 31,32,33. The perform 20 is processed through these increasing temperature stages. The first zone 31 has a larger diameter cylindrical portion 36 and is a pre-heat zone (typically at approximately 250°C) t. The second zone 32 is a process heat zone 32 which is at a temperature above the melting point of the thermoplastic, (for PEEK the hearing zone 32 is typically at approximately 390°C). At the process heat zone 32, the internal bore 34 of the die 30 gradually tapers from the first cylindrical portion 36 to a second cylindrical portion 35 having a minimum diameter D₂. As the pre-form 20 is pushed through this lower diameter portion, the now molten thermoplastic fibre is squeezed within the pre-form as it is pushed through the die and caused to flow and consolidate and form the matrix, removing any air pockets that may have formed during the co-winding process and producing a substantially non-porous composite material.. The value of D₂ is such that the finished part has a Fibre Volume Fraction of between approximately 55% and approximately 65%.

As the now formed tube P gradually exits the process heat zone 32 (where the thermoplastic is above its melting point), it enters a cool down zone 33 where the thermoplastic matrix is brought below its melting point and solidifies. The composite tube P is then removed from the mandrel. The speed with which the mandrel passes through the cooling zone and the cooling zone temperature may be utilized to control the cool down of the thermoplastic matrix in order to obtain optimized properties such as cross-linking and crystallinity, of the composite material. Typically the speed of the mandrel through the die will be about 1 metre/minute.

The continuous pipe P as shown in Fig.4 may for example comprise a fuel carrying pipe for an aircraft and may typically have a length between 1.0-3.0 metres and a diameter of between 8-13 mm. The pipe should have a low porosity and good chemical resistance, and a controlled electrical resistivity. The helically wound fibre reinforcement 10 is held in a matrix 12 of PEEK with a fibre content of about 55% -70% by volume.

## Claims

1. A method of forming a fibre reinforced composite tube or pipe comprising the steps of forming reinforcing fibres (10) and polymeric resin matrix material (12) around a mandrel (M) to provide a composite tubular pre-form (20) on the mandrel (M). passing the mandrel (M) with the pre-form (20) thereon through a heated die (30) to compact and reduce the diameter of the pre-form (20) and change the state of the matrix material (12), the mandrel (M) with the formed tube (P) thereon exiting the die (30) and the formed tube (P) being removed from the mandrel (M), the method including the steps of helically winding the reinforcing fibres (10) and thermoplastic fibres (11) around the mandrel (M), the thermoplastic fibres (11) being caused to flow and solidify on cooling to form the matrix material (12).

2. A method as claimed in Claim 1, wherein the reinforcing fibres (10) are mixed with thermoplastic fibres (11) and the mixed fibres are then wound onto the mandrel (M) of a filament winding machine.

3. A method as claimed in Claim 2, wherein the reinforcing fibres (10) and the thermoplastic fibres (11) are spread and the reinforcing fibres (10) are laid over the thermoplastic fibres (11).

4. A method as claimed in any one of Claims 1 to 3, wherein the ratio of the co-wound reinforcing fibres (10) and the thermoplastic fibres (11) is approximately 40% to 60% respectively (by volume).

5. A method as claimed in any one of Claims 1 to 4, wherein the pre-form (20) is compacted in the die (30) such that the finished part has a Fibre Volume Fraction of between 55% and 65%.

6. A method as claimed in any one of Claims 1 to 5, wherein the heated die (30) has a plurality of heat zones (31, 32) of increasing temperature including a zone (32) having a temperature higher than the melting point of the thermoplastic fibres (11) and the formed tube (P) then exits the die (30) via a cooling zone (33).

7. A method as claimed in Claim 6, wherein the composite tube (P) is subject to a controlled cool down in order to optimize the properties of the matrix material (12).

8. A method as claimed in any one of Claims 1 to 7, wherein additives are supplied separately or as part of the reinforcing fibres (10) and/or matrix fibre mix.

## Patentansprüche

1. Verfahren zum Formen einer faserverstärkten Verbundröhre bzw. eines Rohrs, umfassend die Schritte des Formens von Verstärkungsfasern (10) und eines Polymerharz-Matrixmaterials (12) um einen Dom (M) herum, um einen röhrenförmigen Verbundvorformling (20) auf dem Dom (M) bereitzustellen, des Gebens des Doms (M) mit dem Vorformling (20) darauf durch ein erhitztes Formwerkzeug (30), um den Vorformling (20) zu verdichten und seinen Durchmesser zu reduzieren und den Zustand des Matrixmaterials (12) zu ändern, wobei der Dom (M) mit der geformten Röhre (P) darauf das Formwerkzeug (30) verlässt und die geformte Röhre (P) von dem Dom (M) abgenommen wird, wobei das Verfahren die Schritte des schraubenförmigen Aufwickelns der Verstärkungsfasern (10) und der thermoplastischen Fasern (11) um den Dom (M) herum umfasst, wobei die thermoplastischen Fasern (11) zum Fließen und beim Abkühlen zum Verfestigen gebracht werden, um das Matrixmaterial (12) zu bilden.

2. Verfahren nach Anspruch 1, wobei die Verstärkungsfasern (10) mit thermoplastischen Fasern (11) gemischt werden und die gemischten Fasern dann auf den Dom (M) einer Filamentwickelmaschine aufgewickelt werden.

3. Verfahren nach Anspruch 2, wobei die Verstärkungsfasern (10) und die thermoplastischen Fasern (11) verteilt werden und die Verstärkungsfasern (10) über die thermoplastischen Fasern (11) gelegt werden.

4. Verfahren nach einem der Ansprüche 1 bis 3, wobei das Verhältnis der gleichzeitig aufgewickelten Verstärkungsfasern (10) und der thermoplastischen Fasern (11) jeweils ungefähr 40 bis 60 Volumenprozent beträgt.

5. Verfahren nach einem der Ansprüche 1 bis 4, wobei der Vorformling (20) in dem Formwerkzeug (30) derart verdichtet wird, dass das fertige Teil einen Faservolumenanteil zwischen 55 % und 65 % aufweist.

6. Verfahren nach einem der Ansprüche 1 bis 5, wobei das erhitzte Formwerkzeug (30) eine Vielzahl von Wärmezonen (31, 32) zunehmender Temperatur aufweist, wozu eine Zone (32) gehört, die eine Temperatur aufweist, die höher als der Schmelzpunkt der thermoplastischen Fasern (11) ist, und die geformte Röhre (P) dann das Formwerkzeug (30) über eine Kühlzone (33) verlässt.

7. Verfahren nach Anspruch 6, wobei die Verbundröhre (P) einer geregelten Abkühlung unterzogen wird, um die Eigenschaften des Matrixmaterials (12) zu optimieren.

8. Verfahren nach einem der Ansprüche 1 bis 7, wobei Zusatzstoffe getrennt oder als Teil der Verstärkungsfasern (10) und/oder der Matrixfasermischung zugeführt werden.

## Revendications

1. Procédé de formation d'un tube ou d'un tuyau composite renforcé par des fibres, comprenant les étapes de formation de fibres de renfort (10) et du matériau en matrice de résine polymère (12) autour d'un mandrin (M), afin d'obtenir une préforme tubulaire composite (20) sur le mandrin (M), le passage du mandrin (M) avec la préforme (20) sur lui à travers une matrice chauffée (30) pour compacter et pour réduire le diamètre de la préforme (20) et changer l'état du matériau en matrice (12), le mandrin (M) surmonté du tube formé (P) quittant de la matrice (30) et le tube formé (P) étant retiré du mandrin (M), le procédé comprenant les étapes d'enroulement hélicoïdal des fibres de renfort (10) et des fibres thermoplastiques (11) autour du mandrin (M), les fibres thermoplastiques (11) étant amenées à s'écouler et à se solidifier lors de leur refroidissement pour former le matériau en matrice (12).

2. Procédé selon la revendication 1, dans lequel les fibres de renfort (10) sont mélangées avec des fibres thermoplastiques (11) et où les fibres mélangées sont ensuite enroulées sur le mandrin (M) d'une machine d'enroulement de filaments.

3. Procédé selon la revendication 2, dans lequel les fibres de renfort (10) et les fibres thermoplastiques (11) sont étalées et où les fibres de renfort (10) sont déposées sur les fibres thermoplastiques (11).

4. Procédé selon l'une quelconque des revendications 1 à 3, dans lequel le rapport des fibres de renfort co-enroulées (10) aux fibres thermoplastiques (11) avoisine 40 à 60 % respectivement (en volume).

5. Procédé selon l'une quelconque des revendications 1 à 4, dans lequel la préforme (20) est compactée dans la matrice (30) de sorte que la partie finie a une Fraction de volume de fibre comprise entre 55 et 65 %.

6. Procédé selon l'une quelconque des revendications 1 à 5, dans lequel la matrice chauffée (30) contient un ensemble de zones de chaleur (31, 32) à température croissante comprenant une zone (32) dont la température est supérieure au point de fusion des fibres thermoplastiques (11) et où le tube formé (P) quitte ensuite la matrice (30) par le biais d'une zone de refroidissement (33).

7. Procédé selon la revendication 6, dans lequel le tube composite (P) est soumis à un refroidissement régulé, afin d'optimiser les propriétés du matériau en matrice (12).

8. Procédé selon l'une quelconque des revendications 1 à 7, dans lequel on introduit des adjuvants séparément ou en tant que partie des fibres de renfort (10) et/ou du mélange de fibres de matrice.
